# EUROPÄISCHE PATENTSCHRIFT

(11) **EP 1 129 126 B1**
(45) Veröffentlichungstag und Bekanntmachung des Hinweises auf die Patenterteilung: **24.03.2004**
(21) Anmeldenummer: 99948924.8
(22) Anmeldetag: 04.10.1999
(51) Int. Cl.: C08J 5/18, C08K 3/34, B32B 27/34

(54) **TRANSPARENTE POLYAMIDFOLIE MIT HOHER FESTIGKEIT**
TRANSPARENT HIGH STRENGTH POLYAMIDE FILM
FILM DE POLYAMIDE TRANSPARENT A HAUTE RESISTANCE MECANIQUE

(30) Priorität: 16.10.1998 DE 19847844; 16.10.1998 DE 19847845; 28.07.1999 DE 19935324; 06.08.1999 DE 19937117
(43) Veröffentlichungstag der Anmeldung: 05.09.2001
(73) Patentinhaber: Wipak Walsrode GmbH & Co. KG, 29656 Walsrode (DE)
(72) Erfinder: EGGERS, Holger, D-29664 Walsrode (DE); GASSE, Andreas, D-29664 Walsrode (DE); KASCHEL, Gregor, D-29699 Bomlitz (DE); BRANDT, Rainer, D-29664 Walsrode (DE); EILERS, Bernd, D-29699 Bomlitz (DE)
(74) Vertreter: Kutzenberger, Helga, Dr.
(86) Internationale Anmeldenummer: PCT/EP1999/007325
(87) Internationale Veröffentlichungsnummer: WO 2000/023506

(56) Entgegenhaltungen:
- EP-A- 0 358 415
- EP-A- 0 810 259
- EP-A- 0 818 508
- DE-A- 19 631 348
- DE-A- 19 705 998

## Beschreibung

Die vorliegende Erfindung betrifft eine flexible ein- oder mehrschichtige Folie mit wenigstens einer Schicht aus Polyamid, die vorzugsweise zwischen 10 und 2000 ppm eines nanodispersen Nukleierungsmittels enthält.

Die erfindungsgemäße Folie zeichnet sich durch gute optische Eigenschaften, eine hohe mechanische Festigkeit, sowie eine gute Thermoformbarkeit aus. Sie ist besonders rationell und sicher auf üblichen Produktionsanlagen, insbesondere Flachfolienanlagen, zu fertigen

Die Folie kann als Monofolie nur aus einer PA-Schicht bestehen oder als Mehrschichtfolie wenigstens eine erfindungsgemäß nukleierte und zusammengesetzte PA-Schicht enthalten.

Polyamidhaltige Folien kommen in großem Umfang u.a. bei der Verpackung von Lebensmitteln zum Einsatz.

Vorteile des Werkstoffes Polyamid sind eine hohe mechanische Festigkeit, eine gute Barriere gegen Sauerstoff, Kohlendioxid und andere unpolare Gase sowie eine hohe Temperaturbeständigkeit und Kratzfestigkeit. Daneben lassen sich polyamidhaltige ungereckte Folien thermisch verformen, d.h. in eine für die Aufnahme eines Füllguts geeignete Form tiefziehen. Folien aus Polyamid sind flexibel und können sich somit den Konturen des Füllguts anpassen. Dies ist beispielsweise bei Vakuumverpackungen wichtig.

Wichtige Eigenschaften solcher Folien sind eine ansprechende Optik, d.h. ein hoher Glanz sowie eine geringe Trübung: Daneben ist eine hohe mechanische Widerstandskraft, insbesondere in Form eines hohen Widerstands gegenüber einer ZerStörung durch Knicken und Falten, im folgenden als Knickbruchfestigkeit bezeichnet, erforderlich.

Polyamid ist ein teilkristallines thermoplastisches Polymer. Das sich in einer Folie einstellende Gefüge des Polyamid ist dabei in hohem Maße von den Verarbeitungsbedingungen sowie der Zusammensetzung des Polyamid abhängig. Je langsamer die Abkühlgeschwindigkeit des Polyamids ist, desto größere kristalline Strukturen können sich durch eine Kristallisation herausbilden. Durch eine Nukleierung läßt sich die Geschwindigkeit der Keimbildung beim Kristallisationsvorgang erhöhen und ein feinerkristallines Gefüge erzielen.

Die Herstellung von Polyamidfolien kann nach dem Flach- oder dem Blasfolienverfahren erfolgen. Das Flachfolienverfahren ist in vielen Fällen bevorzugt, weil es einen gegenüber dem Blasfolienverfahren deutlich höheren Ausstoß pro Maschine ermöglicht. Entsprechende Folien können daher in der Regel kostengünstiger gefertigt werden.

Insbesondere dünne Polyamidfolien erfordern für eine ausreichende Bahnstabilität jedoch hohe Gießwalzentemperaturen. Auf diese Weise stellt sich eine hohe Kristallinität ein, die die erforderliche Festigkeit bewirkt. Nachteilig ist jedoch die mit der kristallinen Struktur einhergehende Trübung sowie der relativ niedrige Glanz der Folie.

Aus diesem Grunde werden nach dem Stand der Technik nukleierte Polyamide für oben beschriebene Anwendungen eingesetzt. Solche Systeme ermöglichen gegenüber nicht nukleiertem Polyamid durch die schnellere und feinerdisperse Kristallisation eine Verbesserung der optischen Eigenschaften, der Knickbruehfestigkeit sowie der Bahnstabilität von daraus gefertigten Folien.

Eine Anwcndungstechnische Information der Bayer AG als namhafter Hersteller von Polyamid faßt den diesbezüglichen Stand der Technik auf diesem Gebiet wie folgt zusammen [ATI KU 25304-9709 d,e / 4332845, 1997, S.3]:

"PA6-Folienprodukte: [...] Um den gestiegenen Anforderungen des Marktes Rechnung zu tragen, war die Entwicklung maßgeschneiderter PA-Rohstoffe für die Folienproduktion erforderlich. So sind in den letzten Jahren u.a. folgende Produkte entwickelt worden: [...] Mittelviskose PA 6 Typen der relativen Lösungsviskosität im Bereich von 3,5 bis 3,8, ausgerüstet mit Verarbeitungs- und Nukleierungsmitteln (Kristallisationskeimbildner). Die besonderen Merkmale dieser Produkte im Vergleich zu den nicht nukleierten, hochviskosen Typen sind: [...]

Mono-Flachfolien in geringen Dicken (ab 15 µm) sind bahnstabiler mit höheren Abzugsgeschwindigkeiten herstellbar,
höherer Kristallinitätsgrad mit besonders feinkörniger und dichter Sphärolithstruktur bessere Dimensionsstabilität, weniger Nachschrumpf durch Kristallisationsvorgänge weniger Trübung bei höheren Chill-Roll-Temperaturen [...] höhere Knickbruchfestigkeit [...]"

Auch mit den nach Stand der Technik nukleierten Polyamiden ist die Ausstoßleistung bei dünnen Flachfolien weiterhin durch eine zu geringe Festigkeit begrenzt. Ebenso weisen entsprechende Folien nach wie vor eine hohe Trübung sowie eine leicht matt erscheinende Oberfläche auf.

Der Einsatz von konventionellen nukleierenden Systemen, insbesondere in Form dispergierter feinteiliger anorganischer fester Partikeln ist Stand der Technik. WO 8802763 nennt hier insbesondere Talkum, Mica, Kaolin und in zweiter Linie solche Substanzen wie Asbest, Aluminium, Silikate, Silberbromid, Graphit, Molybdendisulfid, Lithiumfluorid, Natriumphenylphosphinat, Magnesiumoxid, Quecksilberbromid, Quecksilberchlorid, Cadmiumacetat, Bleiacetat, Silberchlorid, Kieselguhr und dergleichen. Genannte Systeme werden in Konzentrationen zwischen einem Tausendstel Prozent und einem Prozent, bezogen auf das Gesamtgewicht des nukleierten Polymers hinzugegeben.

Die Zugabe fester Partikel im Größenbereich von unterhalb eines Mikrometers in polymere Matrizen und speziell Polyamide ist ebenfalls seit längerem bekannt. Solche Systeme werden in Konzentrationen zwischen etwa 0,3 und 10 Gewichts-% beschrieben. Als Vorteile ergeben sich höhere Steifigkeiten aufgrund der verstärkenden Wirkung der Füllstoffe sowie bei plättchenförmiger Struktur der verwendeten Füllstoffe auch eine höhere Sauerstoffbarriere aufgrund verlängerter Diffusionswege durch die polymere Matrix.

Eine nukleierende Wirkung nanoskaliger Füllstoffe ist nicht beschrieben.

EP 358415 offenbart eine Folie aus einem Polyamidharz mit darin gleichmäßig dispergiertem Schichtsilikat, wobei die einzelnen Schichten des Schichtsilikats Dicken um 1 nm und Seitenlängen bis hinauf zu 1 µm aufweisen können. Die Schichten liegen in der Polyamidmatrix durch geeigneten Aufschluß separiert vor und weisen Abstände voneinander um 10 nm auf. Mit diesem Material in Konzentrationen zwischen 1,2 und 6,5 Gewichts-% Schichtsilikat hergestellte Folien zeichnen sich gegenüber solchen aus reinem Polyamid 6 durch eine deutlich erhöhte Sauerstoffbarriere und Steifigkeit aus. Die Gleiteigenschaften werden verbessert. Die Transparenz von einschichtigen amorph abgeschreckten Flachfolien sowie Blasfolien mit Wasserkühlung mit dem Aufbau Polyamid//Haftvermittler//PE-LD bleibt gegenüber reinem Polyamid 6 unverändert. Anhand aufgeführter Beispiele von PA6-Folien mit abgestuftem Gehalt an Schichtsilikat wird die signifikante Abnahme der Knickbruchfestigkeit und Zunahme der Steifigkeit im Bereich bis 3,0 Gewichts-% Silikat deutlich. Daher sind solche Aufbauten allgemein für die hier vorliegenden Anforderungen nicht geeignet.

WO 9304118, sowie WO 9311190 und WO 93041I7 desselben Anmelders, offenbaren Polymer-Nano-Komposits mit ebenfalls plättchenförmigen Partikeln im

Dickenbereich von wenigen Nanometern, die nicht durch Einpolymerisation sondern durch mechanische Einarbeitung gewonnen werden. Insbesondere werden Komposite aus PA6 und Montmorillonit bzw. PA6 und Silikaten beschrieben mit zwischen 0,27 und 9 Gewichts-% Füllstoffanteil. Messungen an Stäben aus entsprechendem Material ergeben bei einem Anteil von 0,27% Silikat jedoch noch keine Erhöhung der Biegefestigkeit. Diese Materialien lassen sich ebenfalls zu Folien verarbeiten. Vorteilhaft ist in diesem Fall eine parallele Ausrichtung der plättchenförmigen Partikeln zur Folienoberfläche. Es werden Anwendungen als Monofolie sowie die Möglichkeit, Mehrschichtfolien herzustellen, beschrieben. Dabei können die aus diesem Material gefertigten Folien optional gereckt werden, um eine noch bessere Orientierung der Nanopartikeln zu erreichen. Hauptvorteil solcher Folien gegenüber solchen ohne nanoskalige Partikeln ist eine höhere Steifigkeit, die jedoch stets mit einer deutlich herabgesetzten Dehnfähigkeit einhergeht. Im Hinblick auf die geforderte hohe Knickbruchfestigkeit scheiden somit solche Systeme allgemein ebenfalls für die hier gestellten Anforderungen aus.

EP 818508 offenbart eine Mischung aus 60-98% PA MXD6 mit 2-40% eines aliphatischen Polyamids, das wiederum inorganische Partikeln im Größenbereich von Nanometern enthält. Es werden Mischungen insbesondere mit PA 6 als aliphatischem Polyamid beschrieben. Daneben werden Mehrschichtfolien als daraus herstellbare Formteile beschrieben. Sämtliche genannten Aufbauten weisen als Vorteil eine hohe Sauerstoffbarriere auf, die auch durch eine Sterilisation nicht beeinträchtigt wird. Gegenüber einer Flachfolie aus reinem PA6 weist eine erfindungsgemäße Folie mit dem Aufbau PA 6//(80% PA MXD6 + 20% PA 6 mit Nanoteilchen)//PA 6 keine nennenswerte Verbesserung der Transparenz auf. Hauptnachteil solcher Strukturen mit einem hohen Anteil von PA MXD6 ist wiederum die geringe Knickbruch- und Durchstoßfestigkeit dieses Materials. Solche Aufbauten sind somit für die hier vorliegenden Anforderungen nicht geeignet.

EP 810259 beschreibt ebenfalls eine Polyamidformmasse mit nanodispersen Füllstoffen. Durch Zugabe genügend feinteiliger Oxide, Oxihydrate oder Carbonate kann die dort gewünschte Barrierewirkung des Polyamid verbessert werden. Die Teilchen haben bevorzugt einen Durchmesser von weniger als 100 nm und werden in Konzentrationen von 0,1 bis 10 Gewichts-%, bevorzugt zwischen 1 bis 3 Gewichts-% eingesetzt. Das Patent beschreibt auch mehrschichtige Folien mit wenigstens einer Schicht aus dieser Formmasse zur Verbesserung der Sauerstoffsperre. Die optischen Eigenschaften einer Folie aus einem mit 1 Gewichts-% Silikat gefüllten Polyamid 6 verschlechtern sich jedoch gegenüber dem nicht additivierten System signifikant. Ebenso verschlechtert sich die Reißdehnung, und der Zugmodul verringert sich. Entsprechende Folien sind daher allgemein ebenfalls für den vorliegenden Anwendungsfall ungeeignet.

Es stellte sich die Aufgabe, eine flexible Polyamidfolie bereitzustellen, die auf Flachfolienanlagen üblicher Bauart höhere Ausstoßleistungen als herkömmliche Typen ermöglicht. Daneben soll die Folie einen guten Glanz und eine gute Transparenz sowie eine ausreichend hohe Knickbruchfestigkeit aufweisen.

Erfindungsgemäß gelang dies durch Bereitstellung einer ein- oder mehrschichtigen Folie mit wenigstens einer Schicht (I) aus einem Polyamid mit darin dispergierten nanoskaligen nukleierenden Partikeln, dadurch gekennzeichnet,
daß die kleinsten in der Dispersion eine starre Einheit bildenden Bestandteile der Partikeln im zahlengewichteten Mittel aller Bestandteile in wenigstens einer, für jedes Bestandteil beliebig wählbaren, Richtung eine Ausdehnung von nicht mehr als 100 nm aufweisen,

daß bei einer Abkühlung der Schicht (I) aus dem vollständig aufgeschmolzenen Zustand mit einer Abkühlrate zwischen 10° und 20°C pro Minute kristalline Strukturen entstehen, die von der Oberfläche der Partikeln ausgehen,

daß der Gewichtsanteil der Partikeln, bezogen auf das Gesamtgewicht des die Schicht (I) bildenden Polyamids zwischen 10 ppm und 3000 ppm, vorzugsweise zwischen 10 ppm und 2000 ppm, liegt. daß das die Schicht (I) bildende Polyamid zu wenigstens 90 % Polyamid 6, bezogen auf die gesamte Masse des Polyamids in dieser Schicht, enthält.

Die erfindungsgemäße Folie kann neben einer oder mehrerer Schichten (I) auch weitere polyamidhaltige Schichten mit weniger als 10 ppm nanoskaligem Nukleierungsmittel oder ganz ohne nanoskaliges Nukleierungsmittel enthalten. Dies bringt im Sinne der Erfindung jedoch keine Vorteile.

Das die Schicht (I) sowie weitere aus Polyamid bestehende Schichten bildende Polyamid kann neben Polyamid 6 Polyamid der Typen Polyamid 10, Polyamid 12, Polyamid 66, Polyamid 610, Polyamid 61, Polyamid 612, Polyamid 6/66, Polyamid 6I/6T, Polyamid MXD6, Polyamid 6/61, Polyamid 6/6T, Polyamid 6/IPDI oder andere aliphatische oder aromatische Homo- und Copolyamide oder Mischungen daraus enthalten. Bevorzugt enthält Schicht (I) reines Polyamid 6. Zu hohe Anteile an anderen Polyamiden verschlechtern insbesondere die Bahnstabilität der Folie.

Die aus Polyamid bestehenden Schichten der erfindungsgemäßen Folie können auch übliche weitere Additive, die die Funktionalität der Folie verbessern, wie Gleitmittel, insbesondere Ethylcnbisstearylamid enthalten. Die Außenschicht kann zusätzlich Antiblockmittel enthalten Diese sind bekannte feste anorganische Partikel, die aus der äußeren Oberfläche der Oberfläche hervortreten und auf diese Weise das Gleitverhalten der Folie verbessern. Hierfür geeignet sind Siliziumoxid, Calciumcarbonat, Magnesiumsilikat, Aluminiumsilikat, Calciumphosphat, Talkum und dergleichen. Bevorzugt kommt daraus Siliciumdioxid zum Einsatz. Wirksame Mengen liegen im Bereich von 0,1 bis 2 Gewichts-%, vorzugsweise 0,1 bis 0,8 Gewichts-%. Die mittlere Teilchengröße liegt zwischen 1 und 15 µm, wobei hier Teilchen mit kugelförmiger Gestalt besonders geeignet sind.

Der Gewichtsanteil der nanoskaligen nukleierenden Partikeln, bezogen auf das Gesamtgewicht der die Schicht (I) bildenden Zusammensetzung beträgt besonders bevorzugt zwischen 50 und 1000 ppm, ganz besonders bevorzugt zwischen 100 und 500 ppm.
Bevorzugt sind Partikeln, deren kleinste in der Dispersion eine starre Einheit bildenden Bestandteile in zwei senkrecht zueinander stehenden, beliebig wählbaren, Richtungen jeweils eine Ausdehnung von wenigstens dem Zehnfachen der Größe der Bestandteile in der Richtung mit der geringsten Ausdehnung des Bestandteils aufweisen. Die Dicke dieser plättchenförmigen Teilchen ist bevorzugt kleiner als 10 nm. Die in Schicht (I) eingesetzten Partikeln sind bevorzugt Schichtsilikate. Diese können ausgewählt sein aus der Gruppe umfassend Phyllosilikate wie Magnesiumsilikat oder Aluminiumsilikat, sowie Montmorillonit, Saponit, Beidellit, Nontronit, Hectorit, Stevensit, Vermiculit, Halloysit oder deren synthetische Analoga.

Die erfindungsgemäße Folie kann ein- oder mehrschichtig aufgebaut sein. Eine mehrschichtige Ausführung enthält wenigstens eine Schicht (I). Eine Ausführung mit mehr als einer Schicht (I) kann unterschiedlich zusammengesetzte Schichten (I) enthalten.

Es ist bei einer mehrschichtigen Ausführung der erfindungsgemäßen Folie vorteilhaft, eine Schicht (1) wegen des guten Glanzes als Außenschicht vorzusehen.

Insbesondere möglich sind Folien, die nur aus einer Polyamidschicht bestehen oder nur polyamidhaltige Schichten enthalten. Solche Polyamidfolien weisen bevorzugt Dicken zwischen 5 und 100 µm, besonders bevorzugt zwischen 10 und 50 µm und insbesondere bevorzugt zwischen 13 und 30 µm auf. Diese können gegebenenfalls in weiteren Verarbeitungsschritten mit anderen Schichten versehen werden.

Eine mehrschichtige Ausführung der erfindungsgemäßen Folie kann zur Erleichterung der Heißsiegelbarkeit eine ein- oder mehrschichtige Siegelschicht (V), auf einer Außenseite der Mehrschichtfolie aufweisen. Die Siegelschicht (V) bildet somit die dem Füllgut zugewandte Innenseite der erfindungsgemäßen Mehrschichtfolie. Die Siegelschicht (V) enthält in bevorzugter Form die üblicherweise als Siegelmedium verwendeten Polymere oder Mischungen aus Polymeren aus der Gruppe umfassend Copolymerisate aus Ethylen und Vinylacetat (E/VA), besonders bevorzugt mit einem Vinylacetat-Gehalt, bezogen auf das Gesamtgewicht des Polymers, von höchstens 20% , Copolymerisate aus Ethylen und ungesättigten Estern wie Butylacrylat oder Ethylacrylat (E/BA bzw. E/EA), Copolymerisate aus Ethylen und ungesättigten Carbonsäuren (E/AA, E/MAA), besonders bevorzugt mit einem Gehalt des Carbonsäurecomonomers, bezogen auf das Gesamtgewicht des Polymers, von höchstens 15%, in noch weiter bevorzugter Form höchstens 8%, Salze der Copolymerisate aus Ethylen und ungesättigten Carbonsäuren, insbesondere E/MAA, (Ionomere), besonders bevorzugt mit einem Gehalt des Carbonsäurecomonomers, bezogen auf das Gesamtgewicht des Ionomers, von höchstens 15%, in noch weiter bevorzugter Form höchstens 10%, Polyethylen niedriger Dichte (PE-LD), besonders bevorzugt in einer Dichte von wenigstens 0,91 g/cm³ und höchstens 0,935 g/cm³, Polyethylen hoher Dichte (PE-HD), Copolymerisate (PE-LLD) aus Ethylen und □-Olefinen mit wenigstens 3 C-Atomen, beispielsweise Buten, Hexen, Octen, 4-Methyl-1-Penten. Die Copolymerisate (PE-LLD) aus Ethylen und □-Olcfinen können mit konventionellen Katalysatoren oder mit Metallocen-Katalysatoren hergestellt sein. Besonders bevorzugt sind daraus Copolymerisate (PE-LLD) aus Ethylen und □-Olefinen mit einer Dichte von wenigstens 0,90 g/cm³ und höchstens 0,94 g/cm³.

Die erfindungsgemäße Mehrschichtfolie kann zusätzlich zu der oder den polyamidhaltigen Schichten und gegebenfalls der Siegelschicht (V) auch eine oder mehrere EVOH-haltige Schichten (III) zur Verbesserung der Sauerstoffsperreigenschaften enthalten, wobei die Schichten (III) bevorzugt wenigstens 50 Gewichts-%, bezogen auf das Gesamtgewicht der jeweiligen EVOH-haltigen Schicht, eines EVOH mit wenigstens 85 und höchstens 40 Mol-% Vinylacetat, das zu wenigstens 90% verseift ist, enthalten. In einer besonders bevorzugten Form ist eine EVOH-haltige Schicht (III) zwischen zwei polyamidhaltigen Schichten plaziert.

Die erfindungsgemäße Folie kann zusätzlich zu den polyamidhaltigen Schichten, gegebenenfalls der Siegelschicht und gegebenenfalls wenigstens einer EVOH-haltigen Schicht haftvermittelnde Schichten (IV) enthalten. Eine solche haftvermittelnde Schicht ist bevorzugt ein Kaschierklebstoff auf Basis von Polyurethanen oder Polyesterurethanen oder ein extrudierbarer Haftvermittler.

Zusätzlich zu den polyamidhaltigen Schichten, gegebenenfalls der Siegelschicht und gegebenenfalls wenigstens einer EVOH-haltigen Schicht sowie haftvermittelnde Schichten kann die erfindungsgemäße Mehrschichtfolie weitere polymere Schichten enthalten.

Die erfindungsgemäße Folie läßt sich auf üblichen Anlagen zur Produktion von Mono- oder Mehrschichtfolien herstellen.

Die erfindungsgemäße Mehrschichtfolie kann auch nach der Extrusion einem Reckvorgang unterzogen werden. Die Orientierung kann nur in Längsrichtung, nur in Querrichtung, zuerst in Längs- und anschließend in Querrichtung, simultan in Längsund Querrichtung oder in Kombinationen aus diesen Schritten erfolgen. Dabei kann die Reckung für die gesamte Mehrschichtfolie oder für Teilverbunde daraus durchgeführt werden.

Die erfindungsgemäße Mehrschichtfolie kann auf der Außenseite oder zwischen zwei inneren Schichten mit einer Schicht aus einem Metalloxid, darstellbar als MOx, versehen werden. Diese Schicht weist vorzugsweise eine Dicke von 5 bis 200 nm auf. In genannter Summenformel liegt x zwischen 1 und 2,5; M ist vorzugsweise Silikon, Eisen oder Aluminium.

Die erfindungsgemäße Folie kann auch auf der Außenseite, der Innenseite oder zwischen einzelnen Schichten bedruckt sein.

Mit der erfindungsgemäßen Folie gelingt es überraschenderweise, eine Folie bereitzustellen, die gegenüber Folien nach dem Stand der Technik als Flachfolie eine erheblich verbesserte Bahnstabilität und deutlich höhere Abzugsgeschwindigkeiten ermöglicht. Damit wird eine höhere Ausnutzung bestehender Ressourcen ermöglicht.

Im Gegensatz zu herkömmlichen nukleierten Polyamiden weist die erfindungsgemäße Folie zusätzlich noch eine bessere Transparenz auf. Die Folie ist flexibel und geschmeidig und zeichnet sich durch eine hohe Knickbruchfestigkeit aus.

Für den Erfinder unerwartet war die Tatsache, daß die genannten Eigenschaften bereits bei Zugabe geringster Mengen nanoskaliger nukleierender Füllstoffe eintraten.

Im Gegensatz zum publizierten Stand der Technik, wonach Nukleierungsmittel oberhalb einer systemspezifisch gegebenen Konzentration zu keiner weiteren Wirksamkeitserhöhung führen, bewirken zu hohe Zugabemengen der hier verwendeten nukleierenden nanoskaligen Füllstoffe jedoch eine erhebliche Versprödung der Folie. Daneben kommt es bei einer Fertigung als Flachfolie auf der Gießwalze zu Wellenbildungen, die zu unbrauchbaren Folien führen. Es war nicht zu erwarten, daß sich ausschließlich in einem niedrigen Konzentrationsbereich der verwendeten nanoskaligen Nukleierungsmittel die Nachteile einer zu hohen Dosierung bei Erhalt der Vorteile vermeiden ließen.

### Beispiele

Es wurden sechs einschichtige Flachfolien aus Polyamid 6 mit einer Dicke von 15 µm auf einer Flachfolienanlage üblicher Bauart gefertigt. Die Gießwalze hatte jeweils eine Temperatur von 125°C und eine Umfangsgeschwindigkeit von 140 m/min. Die Verweilzeit der Folie auf der Gießwalze betrug 0,4 Sekunden.

Die sechs Muster unterscheiden sich im Gehalt an nanoskaligem Nukleierungsmittel. Als Vergleichsmuster wurde ein konventionell mit Talkum nukleiertes Polyamid 6 herangezogen.

### Im einzelnen wurden folgende Folien gefertigt:

**Vergleichsbeispiel 1 (V1):**

Folie aus Polyamid 6 mit 600 ppm Ethylen-Bisstearylamid und mit ca. 150 ppm Talkum als Nukleierungsmittel. Das verwendete Polyamid hat eine relative Lösungsviskosität von 3,8 in m-Kresol.

### Beispiel 2 (B2):

Folie aus einer Mischung aus zwei Polyamiden, wobei 99 Gewichts-% der Mischung durch das Polyamid aus Vergleichsbeispiel 1 und 1 Gewichts-% der Mischung durch ein Polyamid 6 mit einer relativen Lösungsviskosität von 3,6 in m-Kresol enthaltend 2 Gewichts-% nanoskalig in Plättchenform dispergiertes Schichtsilikat (Montmorillonit) gebildet werden. Das Schichtsilikat des Polyamids 6 weist Dicken von etwa einem Nanometer und Plättchendurchmesser von 100 bis 1000 nm auf. In kontrastierten transmissionselektronenmikroskopischen Aufnahmen sind bei den hier gefertigten Beispielen und Vergleichsbeispielen 2 bis 6 von der Oberfläche der Silikatplättchen ausgehende in die Polyamidmatrix hineingewachsene Kristallite erkennbar.

Es ergibt sich ein Gehalt an nanoskaligem Nukleierungsmittel von 200 ppm.

### Beispiel 3 (B3):

Folie wie in Beispiel 2, jedoch aus einem Polyamid 6 mit einem Mischungsverhältnis von 95 zu 5 Gewichts-% statt 99 zu 1 Gewichts-% der jeweilig verwendeten Polyamid 6-Typen in gleicher Reihenfolge der Aufzählung. Es ergibt sich ein Gehalt an nanoskaligem Nukleierungsmittel von 1000 ppm.

### Beispiel 4 (B4):

Folie wie in Beispiel 2, jedoch aus einem Polyamid 6 mit einem Mischungsverhältnis von 92,5 zu 7,5 Gewichts-% statt 99 zu 1 Gewichts-% der jeweilig verwendeten Polyamid 6-Typen in gleicher Reihenfolge der Aufzählung. Es ergibt sich ein Gehalt an nanoskaligem Nukleierungsmittel von 1500 ppm.

### Vergleichsbeispiel 5 (V5):

Folie wie in Beispiel 2, jedoch aus einem Polyamid 6 mit einem Mischungsverhältnis von 70 zu 30 Gewichts-% statt 99 zu 1 Gewichts-% der jeweilig verwendeten Polyamid 6-Typen in gleicher Reihenfolge der Aufzählung. Es ergibt sich ein Gehalt an nanoskaligem Nukleierungsmittel von 6000 ppm.

### Vergleichsbeipieleispiel 6 (V6):

Folie aus Polyamid 6 mit einer relativen Lösungsviskosität von 3,6 in m-Kresol enthaltend 2 Gewichts-% nanoskalig in Plättchenform dispergiertes Schichtsilikat (Montmorillonit). Es handelt sich um das in Beipiel 2 mit einem Anteil von 1 Gewichts-% in einer Polyamidmischung verwendete Polyamid 6. Es hat einen Gehalt an nanoskaligem Nukleierungsmittel von 20000 ppm.

An den gefertigten Mustern wurden die folgenden physikalischen, produktions- und anwendungstechnischen Eigenschaften wie folgt bestimmt:

Die Knickbruchfestigkeit bei einer Temperatur von 23°C und einer relativen Feuchte von 50%, indem ein Probenzuschnitt einlagig zu einem Zylinder der Länge 198 mm und einem Umfang von 280 mm aufgerollt und beidseitig in entsprechend geformten Halterungen eingespannt wird. Die freie Länge des von der Folie geformten Zylinders zwischen den Halterungen beträgt 192 mm. Unter gleichzeitiger Drehung um 440° um die den Zylinder beschreibende Symmetrieachse werden die Halterungen mit einer gegebenen Zahl von Zyklen und einer Frequenz von 35 Zyklen pro Minute auf einen Abstand von 40 mm einander angenähert. Die zu prüfenden Folien werden zuvor 7 Tage in einem Klima von 23°C und 50% relativer Luftfeuchte gehalten. Die Zahl der auf diese Weise in der Folie nach der vorgegebenen Zahl von Hüben entstandenen Knickbrüche läßt sich durch einseitiges Benetzen der Folie mit. Ammoniaklösung bei gleichzeitigem Kontakt der anderen Folienseite zu einem Bogen Lichtpauspapier bestimmen. Die Zahl der nach 15 min erkennbaren, durch Ammoniak hervorgerufenen, blau-schwarzen Flecken auf dem Lichtpauspapier wird der Zahl der Knickbrüche im untersuchten Folienabschnitt zugeordnet. Der Wert wird dabei als Durchschnitt der Einzelwerte aus zwei Prüfmustern gewonnen.

Die Trübung nach ASTM D 1003.

Der Glanz auf der Außenseite der Folie unter einem Winkel von 20° nach DIN 67530.

Die Produzierbarkeit als Flachfolie unter den genannten Bedingungen. Es wurde insbesondere die Ablösung von der Gießwalze im Bereich der Randfixierung sowie die Stabilität und Planlage der Folie bewertet. Zusätzlich wurde die überraschende Beobachtung gemacht, daß hochgefüllte Folien auf der Gießwalze eine unerwünschte Wellenstruktur bilden. Deren Auftreten führte zu einer negativen Beurteilung. Die Ergebnisse wurden in die Kategorien ++ sehr gut, + gut, - schlecht eingeteilt.

Die Ergebnisse sind in untenstehenden Tabellen zusammengefaßt:

| Merkmal (Einheit) | Beispiel (B)oder Vergleichsbeispiel (V) PA6-Monofolien, Dicke = 15 µm | | | | | |
|---|---|---|---|---|---|---|
| | V1 | B2 | B3 | B4 | V5 | V6 |
| Gehalt an nanoskaligem Nukleierungsmittel (ppm) | 0 | 200 | 1 000 | 1 500 | 6 000 | 20 000 |
| Glanz (Glanzeirdieiten) | 93 | 123 | 127 | 134 | 141 | 152 |
| Trübung (%) | 5,1 | 2,3 | 2,1 | 1,6 | 1,7 | 1,9 |
| Lochzahl nach 500 Hüben | 3,0 | 2,5 | 4,0 | 6,5 | 18,5 | >20 |
| Produzierbarkeit | -* | + | ++ | ++ | -** | -** |

| | | | | | | |
|---|---|---|---|---|---|---|
| Eigenschaften der Beispiele und Vergleichsbeispiele Erläuterungen zur Produzierbarkeit: -* Die Folie klebt im Randbereich an der Gießwalze und überdehnt bei Ablösung. | | | | | | |
| -** Die Folie bildet auf der Gießwalze eine längsgerichtete Wellenstruktur aus. | | | | | | |

## Patentansprüche

1. Ein- oder mehrschichtige Folie mit wenigstens einer Schicht (I) aus einem Polyamid mit darin dispergierten, nanoskaligen, nukleierenden Partikeln, **dadurch gekennzeichnet, daß** die kleinsten in der Dispersion eine starre Einheit bildenden Bestandteile der Partikeln im zahlengewichteten Mittel aller Bestandteile in wenigstens einer, für jedes Bestandteil beliebig wählbaren Richtung eine Ausdehnung von nicht mehr als 100 nm aufweisen, bei einer Abkühlung der Schicht (I) aus dem vollständig aufgeschmolzenen Zustand mit einer Abkühlrate zwischen 10° und 20°C pro Minute kristalline Strukturen entstehen, die von der Oberfläche der Partikeln ausgehen, der Gewichtsanteil der Partikeln, bezogen auf das Gesamtgewicht des die Schicht (I) bildenden Polyamids, zwischen 10 ppm und 3000 ppm liegt und das die Schicht (I) bildende Polyamid zu wenigstens 90% Polyamid 6, bezogen auf die gesamte Masse des Polyamids in dieser Schicht, enthält.

2. Folie nach Anspruch 1, **dadurch gekennzeichnet, daß** Schicht (I) neben Polyamid 6 ein Polyamid ausgewählt aus der Gruppe umfassend Polyamid 6, Polyamid 10, Polyamid 12, Polyamid 66, Polyamid 610, Polyamid 61, Polyamid 612, Polyamid 6/66, Polyamid 6I/6T, Polyamid MXD6, Polyamid 6/6I, Polyamid 6/6T, Polyamid 6/IPDI, Copolymere der diese Polymere bildenden Monomere oder Mischungen dieser Polymere oder Copolymere enthält.

3. Folie nach Anspruch 1, **dadurch gekennzeichnet, daß** die Schicht (I) reines Polyamid 6 enthält.

4. Folie nach einem der Ansprüche 1 bis 3, **dadurch gekennzeichnet, daß** die in Schicht (I) dispergierten Partikel Teilchen aufweisen, die in zwei senkrecht zueinander stehenden, für jedes Teilchen beliebig wählbaren Richtungen jeweils eine Ausdehnung von wenigstens dem Zehnfachen der Ausdehnung der Teilchen in der Richtung mit der geringsten Ausdehnung aufweisen.

5. Folie nach einem der Ansprüche 1 bis 3, **dadurch gekennzeichnet, daß** die kleinsten in der Dispersion eine starre Einheit bildenden Bestandteile der in Schicht (I) dispergierten Partikel in zwei senkrecht zueinander stehenden, beliebig wählbaren Richtungen jeweils eine Ausdehnung von wenigstens dem Zehnfachen der Ausdehnung der Bestandteile in der Richtung mit der geringsten Ausdehnung des Bestandteils aufweisen.

6. Folie nach einem der Ansprüche 1 bis 5, **dadurch gekennzeichnet, daß** die in Schicht (I) eingesetzten Partikeln Schichtsilikate sind.

7. Folie nach Anspruch 6, **dadurch gekennzeichnet, daß** die Schichtsilikate ausgewählt sind aus der Gruppe umfassend Phyllosilikate wie Magnesiumsilikat oder Aluminiumsilikat, sowie Montmorillonit, Saponit, Beidellit, Nontronit, Hectorit, Stevensit, Vermiculit, Halloysit und deren synthetische Analoga.

8. Folie nach einem der Ansprüche 1 bis 7, **dadurch gekennzeichnet, daß** der Gewichtsanteil der Partikeln, bezogen auf das Gesamtgewicht des die Schicht (I) bildenden Polyamids, zwischen 10 ppm und 2000 ppm liegt.

9. Mehrschichtige Folie nach einem der Ansprüche 1 bis 7, **dadurch gekennzeichnet, daß** sie mehr als eine Schicht (I) enthält, die unterschiedlich zusammengesetzt sein können.

10. Mehrschichtige Folie nach einem der Ansprüche 1 bis 9, **dadurch gekennzeichnet, daß** sie neben einer oder mehrerer Schichten (I) auch weitere polyamidhaltige Schichten (II) mit keinem oder mit weniger als 10 ppm nanoskaligem Nukleierungsmittel enthalten.

11. Mehrschichtige Folie nach einem der Ansprüche 1 bis 10, **dadurch gekennzeichnet, daß** sie eine oder mehrere EVOH-haltige Schichten (III) enthält, vorzugsweise eine EVOH-haltige Schicht (III) zwischen zwei polyamidhaltigen Schichten.

12. Mehrschichtige Folie nach einem der Ansprüche 1 bis 11, **dadurch gekennzeichnet, daß** sie eine wenigstens einschichtige Siegelschicht (V) auf einer Außenseite der Mehrschichtfolie aufweist

13. Mehrschichtige Folie nach einem der Ansprüche 1 bis 12, **dadurch gekennzeichnet, daß** sie eine oder mehrere haftvermitteInde Schichten (IV) enthält.

14. Mehrschichtige Folie nach einem der Ansprüche 1 bis 13, **dadurch gekennzeichnet, daß** sie zusätzlich zu den Schichten (I) und gegebenenfalls (II), (III), (IV) und/oder (V) eine oder mehrere weitere polymere Schichten enthält.

15. Folie nach einem der Ansprüche 1 bis 10, **dadurch gekennzeichnet, daß** sie nur polyamidhaltige Schichten aufweist.

16. Folie nach Anspruch 15, **dadurch gekennzeichnet, daß** sie eine Dicke zwischen 5 und 100 µm, vorzugsweise 10 und 50 µm, besonders bevorzugt zwischen 13 und 30 µm aufweist.

17. Folie nach einem der Ansprüche 1 bis 11, **dadurch gekennzeichnet, daß** sie nur polyamidhaltige und EVOH-haltige Schichten aufweist.

18. Mehrschichtige Folie nach einem der Ansprüche 1 bis 17, **dadurch gekennzeichnet, daß** eine Schicht (I) eine Außenschicht der Folie bildet.

19. Folie nach einem der Ansprüche 1 bis 18, **dadurch gekennzeichnet, daß** wenigstens Schicht (I) nach der Extrusion einem Reckvorgang nur in Längsrichtung, nur in Querrichtung, zuerst in Längs- und anschließend in Querrichtung, simultan in Längs- und Querrichtung oder Kombination daraus unterzogen worden ist.

20. Folie nach einem der Ansprüche 1 bis 19, **dadurch gekennzeichnet, daß** sie als Flachfolie hergestellt worden ist.

21. Verwendung einer mehrschichtigen Folie nach einem der Ansprüche 1 bis 19 zur Verpackung von Lebensmitteln auf Form-Füll-Siegel-Maschinen.

## Revendications

1. Film mono- ou multicouche comportant au moins une couche (1) à base d'un polyamide à nanoparticules dispersées servant d'agents de nucléation, **caractérisé en ce que** les plus petits composants des particules formant une unité rigide dans la dispersion présentent en moyenne pondérée en nombre de tous les composants une extension n'excédant pas 100 nm dans au moins une direction pouvant être choisie de façon quelconque pour chaque composant, lors d'un refroidissement de la couche (I) à partir de l'état totalement fondu, à une vitesse de refroidissement comprise entre 10° et 20°C par minute il se forme des structures cristallines qui partent de la surface des particules, la proportion en poids des particules, par rapport au poids total du polyamide constituant la couche (I), est comprise entre 10 ppm et 3 000 ppm et le polyamide constituant la couche (I) contient à raison d'au moins 90 % du polyamide 6, par rapport à la masse totale du polyamide dans cette couche.

2. Film selon la revendication 1, **caractérisé en ce que** la couche (I), outre du polyamide 6, contient un polyamide choisi dans le groupe comprenant le polyamide 6, le polyamide 10, le polyamide 12, le polyamide 66, le polyamide 610, le polyamide 6I, le polyamide 612, le polyamide 6/66, le polyamide 6I/6T, le polyamide MXD6, le polyamide 6/6I, le polyamide 6/6T, le polyamide 6/IPDI, des copolymères des monomères formant ces polymères ou des mélanges de ces polymères ou copolymères.

3. Film selon la revendication 1, **caractérisé en ce que** la couche (I) contient du polyamide 6 pur.

4. Film selon l'une quelconque des revendications 1 à 3, **caractérisé en ce que** les particules dispersées dans la couche (I) comportent des particules qui présentent dans deux directions perpendiculaires pouvant être choisies de façon quelconque pour chaque particule une extension d'au moins le décuple de l'extension des particules dans la direction ayant la plus faible extension.

5. Film selon l'une quelconque des revendications 1 à 3, **caractérisé en ce que** les plus petits composants des particules dispersées dans la couche (I), formant une unité rigide dans la dispersion, présentent chacun dans deux directions perpendiculaires pouvant être choisies de façon quelconque une extension d'au moins le décuple de l'extension des composants dans la direction ayant la plus faible extension du composant.

6. Film selon l'une quelconque des revendications 1 à 5, **caractérisé en ce que** les particules utilisées dans la couche (I) sont des silicates lamellaires.

7. Film selon la revendication 6, **caractérisé en ce que** les silicates lamellaires sont choisis dans le groupe comprenant des phyllosilicates tels que le silicate de magnésium ou le silicate d'aluminium, ainsi que la montmorillonite, la saponite, la beidellite, la nontronite, l'hectorite, la stevensite, la vermiculite, l'halloysite et leurs analogues synthétiques.

8. Film selon l'une quelconque des revendications 1 à 7, **caractérisé en ce que** la proportion en poids des particules, par rapport au poids total du polyamide constituant la couche (I), est comprise entre 10 ppm et 2 000 ppm.

9. Film multicouche selon l'une quelconque des revendications 1 à 7, **caractérisé en ce qu'**il comporte plus d'une couche (I) qui peuvent être de compositions différentes.

10. Film multicouche selon l'une quelconque des revendications 1 à 9, **caractérisé en ce que**, outre une ou plusieurs couches (I), il comporte également d'autres couches (II) contenant du polyamide, ne comportant aucun agent de nucléation nanoparticulaire ou comportant moins de 10 ppm d'agent de nucléation nanoparticulaire.

11. Film multicouche selon l'une quelconque des revendications 1 à 10, **caractérisé en ce qu'**il comporte une ou plusieurs couches (III) contenant de l'EVOH, de préférence une couche (III) contenant de l'EVOH entre deux couches contenant du polyamide.

12. Film multicouche selon l'une quelconque des revendications 1 à 11, **caractérisé en ce qu'**il comporte une couche de soudage (V) au moins monocouche sur une face externe du film multicouche.

13. Film multicouche selon l'une quelconque des revendications 1 à 12, **caractérisé en ce qu'**il comporte une ou plusieurs couches (IV) promouvant l'adhérence.

14. Film multicouche selon l'une quelconque des revendications 1 à 13, **caractérisé en ce que**, en plus des couches (I) et éventuellement (II), (III) (IV) et/ou (V), il comporte une ou plusieurs autres couches polymères.

15. Film selon l'une quelconque des revendications 1 à 10, **caractérisé en ce qu'**il ne comporte que des couches contenant du polyamide.

16. Film selon la revendication 15, **caractérisé en ce qu'**il présente une épaisseur comprise entre 5 et 100 µm, de préférence entre 10 et 50 µm, de façon particulièrement préférée entre 13 et 30 µm.

17. Film selon l'une quelconque des revendications 1 à 11, **caractérisé en ce qu'**il ne comporte que des couches contenant du polyamide et contenant de l'EVOH.

18. Film multicouche selon l'une quelconque des revendications 1 à 17, **caractérisé en ce qu'**une couche (I) constitue une couche externe du film.

19. Film selon l'une quelconque des revendications 1 à 18, **caractérisé en ce qu'**au moins la couche (I) a été soumise après l'extrusion à un processus d'étirage seulement dans le sens longitudinal, seulement dans le sens transversal, d'abord dans le sens longitudinal et ensuite dans le sens transversal, simultanément dans le sens longitudinal et dans le sens transversal ou à une combinaison de tels processus.

20. Film selon l'une quelconque des revendications 1 à 19, **caractérisé en ce qu'**il a été fabriqué sous forme d'un film plat.

21. Utilisation d'un film multicouche selon l'une quelconque des revendications 1 à 19, pour le conditionnement de produits alimentaires sur des machines de formage-remplissage-soudage.

## Claims

1. Single- or multilayer film with at least one layer (I) composed of a polyamide with nano-scale nucleating particles dispersed therein, **characterized in that** the smallest constituents of the particles, forming a rigid unit in the dispersion, have a dimension of not more than 100 nm, this being the number average of all of the constituents in at least one direction freely selectable for each constituent, and when the layer (I) is cooled from the completely molten state at a cooling rate of from 10 to 20°C per minute, crystalline structures are produced which emanate from the surface of the particles, and the proportion by weight of the particles, based on the total weight of the polyamide forming the layer (I), is from 10 to 3 000 ppm, and the polyamide forming the layer (I) comprises at least 90% of nylon-6, based on the total weight of the polyamide in this layer.

2. Film according to Claim 1, **characterized in that** layer (I) comprises, besides nylon-6, a polyamide selected from the group consisting of nylon-6, nylon-10, nylon-12, nylon-6,6, nylon-6,10, nylon-6,I, nylon-6,12, nylon-6/6,6, nylon-6,I/6,T, nylon-MXD,6, nylon-6/6,I, nylon-6/6,T, nylon-6/IPDI, copolymers of the monomers forming these polymers, or mixtures of these polymers or copolymers.

3. Film according to Claim 1, **characterized in that** the layer (I) comprises pure nylon-6.

4. Film according to any of Claims 1 to 3, **characterized in that** the particles dispersed in layer (I) comprise particles each of which has, in two mutually perpendicular directions freely selectable for each particle, a dimension of at least ten times the dimension of the particles in the direction with the smallest dimension.

5. Film according to any of Claims 1 to 3, **characterized in that** the smallest constituents of the particles dispersed in layer (I), forming a rigid unit in the dispersion, each have, in two freely selectable, mutually perpendicular directions, a dimension of at least ten times the dimension of the constituents in the direction with the smallest dimension of the constituent.

6. Film according to any of Claims 1 to 5, **characterized in that** the particles used in layer (I) are sheet silicates.

7. Film according to Claim 6, **characterized in that** the sheet silicates have been selected from the group consisting of phyllosilicates such as magnesium silicate or aluminium silicate, and also montmorillonite, saponite, beidellite, nontronite, hectorite, stevensite, vermiculite, halloysite, and synthetic analogues of these.

8. Film according to any of Claims 1 to 7, **characterized in that** the proportion by weight of the particles, based on the total weight of the polyamide forming the layer (I), is from 10 to 2 000 ppm.

9. Multilayer film according to any of Claims 1 to 7, **characterized in that** it comprises more than one layer (I), which may be differently constituted.

10. Multilayer film according to any of Claims 1 to 9, **characterized in that** they also comprise, besides one or more layers (I), other polyamide-containing layers (II) with no, or with less than 10 ppm of, nano-scale nucleating agent.

11. Multilayer film according to any of Claims 1 to 10, **characterized in that** it comprises one or more EVOH-containing layers (III), preferably one EVOH-containing layer (III) between two polyamide-containing layers.

12. Multilayer film according to any of Claims 1 to 11, **characterized in that** it has an at least single-layer sealable layer (V) on an outer side of the multilayer film.

13. Multilayer film according to any of Claims 1 to 12, **characterized in that** it comprises one or more adhesion-promoting layers (IV).

14. Multilayer film according to any of Claims 1 to 13, **characterized in that** it comprises, in addition to the layers (I) and, where appropriate, (II), (III), (IV) and/or (V), one or more other polymeric layers.

15. Film according to any of Claims 1 to 10, **characterized in that** it has only polyamide-containing layers.

16. Film according to Claim 15, **characterized in that** it has a thickness of from 5 to 100 µm, preferably from 10 to 50 µm, particularly preferably from 13 to 30 µm.

17. Film according to any of Claims 1 to 11, **characterized in that** it has only polyamide-containing and EVOH-containing layers.

18. Multilayer film according to any of Claims 1 to 17, **characterized in that** a layer (I) forms an outer layer of the film.

19. Film according to any of Claims 1 to 18, **characterized in that** at least layer (I) has been subjected, after the extrusion process, to a stretching procedure only longitudinally, only transversely, first longitudinally and then transversely, simultaneously longitudinally and transversely, or a combination of these.

20. Film according to any of Claims 1 to 19, **characterized in that** it has been produced in flat film form.

21. Use of a multilayer film according to any of Claims 1 to 19 for the packaging of food or drink on form, fill and seal machinery.
